# EUROPÄISCHE PATENTSCHRIFT

(11) **EP 4 008 182 B1**
(45) Veröffentlichungstag und Bekanntmachung des Hinweises auf die Patenterteilung: **23.10.2024**
(21) Anmeldenummer: 21401050.6
(22) Anmeldetag: 29.11.2021
(51) Int. Cl.: A01M 7/00

(54) **VERFAHREN ZUM AUSBRINGEN VON SPRITZMITTEL**
METHOD FOR APPLYING SPRAY AGENTS
PROCÉDÉ D'APPLICATION DES AGENTS D'ASPERSION

(30) Priorität: 03.12.2020 DE 102020132127
(43) Veröffentlichungstag der Anmeldung: 08.06.2022
(73) Patentinhaber: Amazonen-Werke H. Dreyer SE & Co. KG, 49205 Hasbergen (DE)
(72) Erfinder: Dasenbrock, Hanno, 49078 Osnabrück (DE); Dasenbrock, Thomas, 23992 Neukloster (DE); Rahe, Florian, 49504 Lotte (DE); Wessels, Thomas, 49080 Osnabrück (DE)

(56) Entgegenhaltungen:
- EP-A1- 2 186 405
- EP-A1- 2 898 773
- DE-A1- 102015 122 148
- DE-A1- 102017 112 052

## Beschreibung

Die Erfindung betrifft ein Verfahren zum Ausbringen von Spritzmittel gemäß dem Oberbegriff des Patentanspruches 1 und eine landwirtschaftliche Spritze zum Ausbringen eines Spritzmittels gemäß dem Oberbegriff des Patentanspruches 9.

Innerhalb der Landwirtschaft sind eine Vielzahl von gezogenen, auf- bzw. angebauten und/oder selbstfahrenden Arbeitsgeräten bekannt. Zu derartigen Arbeitsgeräten gehören unter anderem landwirtschaftliche Spritzen zum Ausbringen von Spritzmittel, wobei das Spritzmittel, je nach Art der Bearbeitung und/oder Behandlung einer landwirtschaftlichen Nutzfläche und/oder dessen Pflanzenbestands, Pflanzenschutz-, Unkrautbekämpfungs- und/oder Düngemittel umfasst.

Gattungsgemäße Spritzen umfassen hierbei zumindest einen Vorratsbehälter zum Bevorraten des Spritzmittels und zumindest ein spritzmittelleitendes und/oder - förderndes Fördersystem zum Zubringen des Spritzmittels ausgehend von dem zumindest einen Vorratsbehälter zu einer Vielzahl von Ausbringelementen, insbesondere Spritzdüsen. Die Spritze umfasst ferner zumindest ein quer zu einer Fahrtrichtung der Spritze ausklappbares bzw. einklappbares Gestänge, wobei die Vielzahl von Ausbringelementen nebeneinander entlang des Gestänges, insbesondere einzelner Abschnitte des Gestänges, angeordnet sind.

Typischerweise ist einer derartigen Spritze zumindest ein Steuer- und/oder Regelsystem zugeordnet, das dazu eingerichtet ist, die Ausbringelemente und/oder zumindest eine Einrichtung innerhalb des Fördersystems in Abhängigkeit zumindest eines Einstellparameters derartig anzusteuern und/oder zu regeln, dass das Spritzmittel bedarfsgerecht, insbesondere individuell und/oder gruppenweise, über die Ausbringelemente auf dem Pflanzenbestand ausbringbar bzw. applizierbar ist. Während des Ausbringens wird somit das Spritzmittel auf dem Pflanzenbestand aufgebracht und zumindest eine Oberfläche wenigstens einer Nutzpflanze, insbesondere eines Blatts, Pflanzenstängels und/oder einer Frucht, mit Spritzmittel benetzt.

Aufgrund immer weiter steigender Anforderungen hinsichtlich Umweltbelastungen und/oder Erträge ist dabei eine optimale Benetzung der Oberflächen mit dem Spritzmittel von entscheidender Bedeutung. Um den zumindest einen Einstellparameter hierfür gezielt anzupassen, sind im Stand der Technik verschiedene Lösungsansätze offenbart. Neben indirekten Ermittlungsverfahren, bei denen die Benetzung durch die Berücksichtigung unterschiedlicher mit dem Ausbringvorgang zusammenhängender Bedingungen bestimmt bzw. ermittelt wird, sind auch Erfassungsverfahren bekannt, bei denen die Benetzung der zumindest einen Oberfläche direkt erfasst wird. Eine Möglichkeit ist dabei, einen Belag des Spritzmittels und/oder die Benetzung der zumindest einen Oberfläche im Nachgang eines Ausbringvorgangs von zumindest einem Ausbringelement auf die zumindest eine Oberfläche zu erfassen und daraus auf eine resultierende Benetzung der zumindest einen Oberfläche zu schließen und darauf basierend den zumindest einen Einstellparameter anzupassen.

Derartige Verfahren sind unter anderem in den Druckschriften EP 2 186 405 A1, DE 10 2017 112 052 A1 und DE 10 2015 122 148 A1 beschrieben.

In der EP 2 898 773 A1 ist ein solches Verfahren zum Ausbringen von Spritzmittel mittels einer landwirtschaftlichen Spritze beschrieben. Bei diesem Verfahren wird das Spritzmittels mittels einer landwirtschaftlichen Spritze auf einer landwirtschaftlichen Nutzfläche und/oder dessen Pflanzenbestand mit zumindest einem eingestellten Einstellparameter ausgebracht. Dabei wird zumindest eine Oberfläche mit dem Spritzmittel benetzt. Des Weiteren wird die zumindest eine benetzte Oberfläche mittels zumindest einer der Spritze zugeordneten Erfassungsvorrichtung erfasst. Eine Ist-Benetzungsqualität wird anhand der zumindest einen erfassten Oberfläche ermittelt. Anschließend wird zumindest eine Abweichung der Ist-Benetzungsqualität zu einer abrufbaren und/oder vorgebbaren Soll-Benetzungsqualität ermittelt.

Nachteilig an derartigen Verfahren ist unter anderem, dass die Übertragung von Daten zwischen der zumindest einen Erfassungsvorrichtung und der Spritze, insbesondere einem Steuer- und/oder Regelsystem, zur Anpassung des Einstellparameters besonders aufwendig und die dafür erforderlichen Vorrichtungen damit mit hohen Kosten verbunden ist. Ferner ist eine Anordnung der zumindest einen Erfassungsvorrichtung an der Spritze, insbesondere im Bereich des relativ zur Spritze beweglichen Gestänges, aufgrund der notwendigen kabelgebundenen Signalleitungen trotz hohem Aufwand nur beschränkt möglich. Des Weiteren ist der Aufwand für eine Nachrüstung solcher Erfassungsvorrichtungen zum Ausführen derartiger Verfahren an bereits bestehenden Spritzen unverhältnismäßig hoch und damit häufig besonders problematisch oder nicht umsetzbar. Insbesondere eine Anordnung solcher Erfassungsvorrichtungen an der beweglichen Spritze, insbesondere dem Gestänge, führt aufgrund der relativen Bewegung zur landwirtschaftlichen Nutzfläche und/oder dem Pflanzenbestand dazu, dass die erreichbare Erfassungsqualität bzw. Erfassungsgenauigkeit und damit der Nutzen derartiger Erfassungsverfahren stark eingeschränkt ist.

Es besteht somit der Bedarf für Verfahren und Vorrichtungen zum Ausbringen von Spritzmittel bei denen zumindest ein Einstellparameter einer Spritze anhand der benetzten Oberflächen mit reduziertem apparativen Aufwand angepasst wird. Insbesondere soll die Erfassungsqualität bzw. Erfassungsgenauigkeit der benetzten Oberfläche gegenüber dem Stand der Technik gesteigert werden.

Diese Aufgabe wird erfindungsgemäß durch die Merkmale des Anspruch 1 gelöst

Im Folgenden bezeichnet der Begriff "Einstellparameter", sofern nicht anders explizit angegeben, eine Einstellung und/oder Parametrierung zumindest einer Vorrichtung innerhalb der Spritze, die einen Durchfluss, insbesondere eine Durchflussmenge, eine Ausbringmenge und/oder einen Druck innerhalb des zumindest einen Fördersystems, Ausbringelements und/oder im Bereich des Ausbringelements zumindest teilweise beeinflusst. Beispielsweise kann eine derartige Vorrichtung zumindest ein Ausbringelement, Ventil und/oder zumindest eine Fördereinrichtung, insbesondere Pumpe, sein. Insbesondere ist hierunter eine Einstellung und/oder Parametrierung zu verstehen, die eine Ausbringrichtung, insbesondere Ausrichtung und/oder einen Winkel zumindest eines Ausbringelements und/oder eine Austrittsrichtung des Spritzmittels beeinflusst. Darüber hinaus ist hierbei vorzugsweise eine Einstellung und/oder Parametrierung zu verstehen, die ein ausbringbares Tröpfchenspektrum und/oder eine ausbringbare Austrittsgeschwindigkeit des Spritzmittels aus dem zumindest einem Ausbringelement beeinflusst.

Infolge der erfindungsgemäßen Maßnahme ist die zumindest eine Erfassungsvorrichtung an zumindest nahezu beliebigen Positionen, insbesondere an der Spritze oder auf und/oder neben der landwirtschaftlichen Nutzfläche, anbringbar. Somit kann eine besonders günstige Position der Erfassungsvorrichtung zur Erfassung der zumindest teilweise benetzten Oberfläche verwendet werden. Beispielweise kann die zumindest eine Erfassungsvorrichtung in Abhängigkeit der Pflanzengröße, der Pflanzenart, dem Entwicklungsstadium und/oder nach Art des Spritzmittels entlang der Spritze, insbesondere dem Gestänge, angeordnet werden.

Die Anpassung des zumindest einen Einstellparameters wird hierbei bevorzugt automatisiert durch die Erfassungsvorrichtung und/oder durch die Spritze, insbesondere durch ein der Spritze zugeordnetes Steuer- und/oder Regelsystem, durchgeführt. Besonders bevorzugt ist außerdem eine zumindest teilweise manuelle bzw. teilautomatisierte Anpassung, bei der dem Bediener zumindest ein Vorschlag für eine Änderung und/oder ein optimaler Wert für den zumindest einen Einstellparameter visuell und/oder akustisch, insbesondere mittels eines Bedien- und/oder Anzeigemittels, vorgeschlagen wird. Vorzugsweise wird ein auf der Basis der Abweichung ermittelter neuer Einstellparameter automatisiert vorgewählt, der anschließend vom Bediener, insbesondere durch die Bedienung des Bedien- und/oder Anzeigemittels, bestätigt wird. Insbesondere kann hierbei zur Bestimmung des neuen Einstellparameters zusätzlich der zuvor eingestellte Einstellparameter, vorzugsweise vom Bediener, dem Steuer- und/oder Regelsystem und/oder der Erfassungsvorrichtung, berücksichtigt werden.

Die Erfassungsvorrichtung ist vorzugsweise dazu eingerichtet, die zumindest eine benetzte Oberfläche berührungslos, insbesondere optisch, zu erfassen, wobei eine Erfassung mittels Berührung alternativ oder zusätzlich ebenfalls denkbar ist. Beispielsweise wird somit eine Temperatur, insbesondere Temperaturdifferenz, ein Farbwert, insbesondere Farbspektrum, eine Oberflächenstruktur und/oder eine elektrische Größe, beispielsweise ein Widerstand, der zumindest einen mit Spritzmittel benetzten Oberfläche erfasst. Ferner wird dabei bevorzugt eine Topfengröße, insbesondere ein Tropfenspektrum, eine Tropfenform, insbesondere ein Tropfenformspektrum, und/oder eine Tropfendichte des auf der Oberfläche befindlichen Spritzmittels erfasst und/oder ausgewertet.

Die Signale werden dabei zumindest teilweise mittels Funk zwischen der Erfassungsvorrichtung und der Spritze, insbesondere dem Steuer- und/oder Regelsystem, und/oder einem Server, insbesondere einem dezentralen Steuer- und/oder Regelsystem, übertragen und/oder ausgetauscht. Die Funkverbindung kann dabei zumindest teilweise als Bluetooth, W-Lan, Mobilfunk, GSM, Radio oder dazu ähnlichen Verbindungen ausgebildet sein.

Somit kann das Ermitteln der Ist-Benetzungsqualität und/oder der Abweichung zwischen Ist- und Soll-Benetzungsqualität zur verbesserten Ressourcenauslastung und/oder -kapazität zumindest teilweise von der Erfassungsvorrichtung, der Spritze und/oder dem Server, insbesondere dezentralen Steuer- und/oder Regelsystem, ausgeführt werden.

Darüber hinaus kann dem Spritzmittel zur Steigerung der Erfassungsqualität bzw. Erfassungsgenauigkeit bevorzugt zumindest ein zusätzlicher Stoff, insbesondere ein auf die Erfassungsvorrichtung abgestimmter Farbstoff oder Tracer, zugegeben werden, wobei ein fluoreszierender Stoff, insbesondere Uranin, besonders bevorzugt ist.

Die Soll-Benetzungsqualität stellt erfindungsgemäß eine von dem Bediener, dem Steuer- und/oder Regelsystem der Spritze und/oder der Erfassungsvorrichtung abrufbare und/oder vorgebbare Benetzung der zumindest einen Oberfläche, insbesondere des Pflanzenbestands, dar. Vorzugsweise wird die Soll-Benetzungsqualität unter Berücksichtigung des zumindest einen Einstellparameters und/oder des zumindest eines Ausbringelements berechnet und/oder bestimmt. Alternativ oder zusätzlich wird zur Berechnung und/oder Bestimmung der Soll-Benetzungsqualität eine Applikationskarte, insbesondere der Spritzmittelbedarf zumindest einer Oberfläche des Pflanzenbestands berücksichtigt. Alternativ oder zusätzlich wird eine in der Vergangenheit erreichte Benetzung der zumindest einen Oberfläche berücksichtigt. Des Weiteren wird besonders bevorzugt das ausgebrachte Spritzmittel, insbesondere zumindest eine die Benetzung beeinflussende Eigenschaft bzw. Benetzungseigenschaft des Spritzmittels, wie beispielsweise eine Oberflächenspannung, Haftfähigkeit usw., zur Berechnung und/oder Bestimmung der Soll-Benetzungsqualität berücksichtigt. Alternativ oder zusätzlich wird die Soll-Benetzungsqualität in Abhängigkeit des erfassten und/oder vorgegebenen Pflanzenbestands, insbesondere dessen Art, Größe und/oder Entwicklungsstadium, ermittelt und/oder vorgegeben.

In einer bevorzugten Ausführungsform des erfindungsgemäßen Verfahrens wird die Ermittlung der Ist-Benetzungsqualität anhand der zumindest einen erfassten Oberfläche von der Erfassungsvorrichtung ausgeführt. Alternativ oder zusätzlich ermittelt die Erfassungsvorrichtung die zumindest eine Abweichung der Ist-Benetzungsqualität zu der abrufbaren und/oder vorgebbaren Soll-Benetzungsqualität. Darüber hinaus wird alternativ oder zusätzlich von der Erfassungsvorrichtung das Anpassen des zumindest einen Einstellparameters auf der Basis der zumindest einen Abweichung ausgeführt. Eine derartige Ausführungsform erlaubt eine besonders einfache Integration und/oder Umsetzung des erfindungsgemäßen Verfahrens an, insbesondere bereits bestehenden, landwirtschaftlichen Spritzen. Insbesondere bei Bedarf besonders hoher Rechenleistungen und/oder komplexer Auswerteverfahren kann somit auf die Rechenkapazität der Erfassungsvorrichtung zurückgegriffen werden, womit die Anforderungen an die Spritze, insbesondere deren Steuer- und/oder Regelsystem, hinsichtlich Rechenleistung zum Ausführen des erfindungsgemäßen Verfahrens besonders gering sind.

In einer erfindungsgemäßen Ausführungsform des Verfahrens wird die zumindest eine Erfassungsvorrichtung entlang der landwirtschaftlichen Fläche und/oder des Pflanzenbestands durch den Bediener getragen. Die Erfassungsvorrichtung ist hierbei mobil und/oder vom Bediener tragbar ausgebildet. Darüber hinaus wird bevorzugt die zumindest eine Oberfläche entlang der landwirtschaftlichen Nutzfläche und/oder des Pflanzenbestands ausgelegt und/oder angebracht. Das Anbringen und/oder Auslegen erfolgt dabei in einem mit Spritzmittel zu benetzenden Bereich auf der landwirtschaftlichen Nutzfläche und/oder dem Pflanzenbestand. Unter der zumindest einen Oberfläche ist dabei eine auslegbare Auffangfläche zu verstehen, die auftreffendes Spritzmittel im Wesentlichen am Ort ihres Auftreffens einfängt und/oder festhält. Vorzugsweise werden die Tropfen des Spritzmittels dabei einzeln und/oder in kleinen Gruppen aufgefangen und/oder festgehalten, insbesondere derart dass die Tropfen einzeln und/oder in kleinen Gruppen erkannt und ausgewertet werden können. Diese Ausführungsform erlaubt es die Benetzungsqualität an besonders relevanten Positionen auf der landwirtschaftlichen Fläche und/oder, insbesondere an einer Nutzpflanze, des Pflanzenbestands zu ermitteln und/oder zu überwachen. Insbesondere benetzte Oberflächen in Bereichen die sich in tieferen Regionen entlang einer Nutzpflanze befinden sind mit einer derartigen Ausführungsform besonders gut erfassbar, da die Erfassungsvorrichtung zumindest nahezu individuell auf die jeweilige benetzte Oberfläche ausgerichtet werden kann.

Ferner ist durch eine mobil ausgeführte Erfassungsvorrichtung eine besonders einfache Anpassbarkeit des erfindungsgemäßen Verfahrens und/oder der landwirtschaftlichen Spritze erreicht. Beispielsweise kann eine jeweilige Erfassungsvorrichtung durch eine andere Erfassungsvorrichtung mit anderen Spezifikationen ausgetauscht werden, um die Erfassung an den jeweiligen Bedarf, insbesondere das Spritzmittel und/oder den Pflanzenbestand, abzustimmen.

In einer anderen bevorzugten Ausführungsform des erfindungsgemäßen Verfahrens wird zumindest eine Soll-Position entlang der landwirtschaftlichen Nutzfläche und/oder des Pflanzenbestands ermittelt und/oder abgerufen. Vorzugsweise wird die zumindest eine Soll-Position anhand der landwirtschaftlichen Nutzfläche und/oder dem Pflanzenbestand, insbesondere deren Geometrie und/oder Abmessungen, bestimmt und/oder festgelegt. Dies kann beispielsweise manuell durch den Bediener, insbesondere dessen Erfahrungen, und/oder automatisiert von der Erfassungsvorrichtung, der Spritze, insbesondere dem Steuer- und/oder Regelsystem und/oder dem Server durchgeführt werden. Außerdem wird die zumindest eine Soll-Position für den Bediener visualisiert, wobei der Bediener die Soll-Position zum Tragen und/oder zum Auslegen und/oder Anbringen der zumindest einen Oberfläche entlang der landwirtschaftlichen Nutzfläche und/oder des Pflanzenbestands berücksichtigt. Die Positionierung der zumindest einen Oberfläche erfolgt hierbei zumindest im Wesentlichen im Bereich der ermittelten und/oder visualisierten Soll-Position. Besonders bevorzugt werden für mehrere zu benetzende Oberflächen jeweils unterschiedliche Positionen ermittelt und/oder visualisiert, anhand derer der Bediener die Oberflächen auf der landwirtschaftlichen Nutzfläche und/oder dem Pflanzenbestand verteilen kann. Mittels einer derartigen Ausführungsform werden durch die Vorgabe derartiger Soll-Positionen zum einen sowohl die Handhabung derartiger Verfahren für den Bediener als auch die Auswertbarkeit bzw. Vergleichbarkeit der erfassten Benetzung in besonders einfacher Weise verbessert.

In einer anderen Weiterbildung des erfindungsgemäßen Verfahrens wird die zumindest eine Abweichung für den Bediener visualisiert. Vorzugsweise wird zumindest ein neuer auf der Basis der Abweichung ermittelter und/oder abgerufener Einstellparameter visualisiert. Hierbei wird dem Bediener eine Differenz zwischen der Soll- und Ist-Benetzungsqualität und/oder des zuvor eingestellten Einstellparameters zum neu ermittelten Einstellparameter angezeigt. Besonders bevorzugt wird der Bediener bei einer Abweichung bzw. Differenz, insbesondere die einen vordefinierten Toleranzbereich überschreitet, visuell oder akustisch informiert. Das Visualisieren der Abweichung und/oder des Einstellparameters erfolgt dabei bevorzugt auf einem der Erfassungsvorrichtung und/oder der Spritze zugeordneten Bedien- und/oder Anzeigemittel, insbesondere einem Display. Drüber hinaus wird bevorzugt der zumindest eine Einstellparameter durch den ermittelten und/oder vom Bediener abgerufenen Einstellparameter ersetzt. Vorzugsweise wird der ermittelte und/oder abgerufene neue Einstellparameter, insbesondere die Differenz zum zuvor eingestellten Einstellparameter, für den Bediener vorgeschlagen, wobei der Bediener den Einstellparameter durch eine manuelle Bedienung anpassen kann. Alternativ oder zusätzlich ist hierbei auch eine automatisierte Anpassung des Einstellparameters durch die Erfassungsvorrichtung und/oder den dezentralen Server denkbar. Mit einer derartigen Ausführungsform sind die Handhabung und/oder die Betriebssicherheit derartiger Verfahren noch weiter gesteigert.

In einer weiteren bevorzugten Ausführungsform des erfindungsgemäßen Verfahrens wird zumindest eine Information zur Umgebung, zum Spritzmittel, zum Pflanzenbestand und/oder zur Spritze, insbesondere zum Einstellparameter, an die zumindest eine Erfassungsvorrichtung übermittelt. Derartige Informationen können Daten zur Spritze, insbesondere der Einstellungen und/oder Parametrierungen, zur Umgebung, insbesondere Temperatur, Feuchtigkeit, Windrichtung und/oder -stärke, und/oder zum Pflanzenbestand, insbesondere dessen Art, Größe und/oder Entwicklungsstadium umfassen. Die zumindest eine Information wird dabei über die Spritze, insbesondere das Steuer- und/oder Regelsystem, den dezentralen Server und/oder online von der Erfassungsvorrichtung abgerufen. Alternativ oder zusätzlich kann zumindest eine Information manuell durch den Bediener in die Erfassungsvorrichtung hinzugefügt werden. Somit kann die zumindest eine Information bei der Ermittlung des zumindest einen Einstellparameters berücksichtigt werden. Vorzugsweise mit Erfassungsvorrichtungen die eine gegenüber der Spritze, insbesondere dem dazu zugeordneten Steuer- und/oder Regelsystem, höhere Rechenkapazität aufweisen, können somit eine höhere Anzahl an Informationen zur Ermittlung des zumindest einen Einstellparameters berücksichtigt werden. Diese Ausführungsform erreicht damit eine noch weiter gesteigerte Erfassungsqualität bzw. Erfassungsgenauigkeit der Benetzung mit besonders geringem apparativen Aufwand.

In einer weiteren anderen bevorzugten Ausführungsform des erfindungsgemäßen Verfahrens wird zumindest ein Kennfeld, vorzugsweise mit zumindest einer Funktionskurve, welches eine Abhängigkeit des zumindest einen Einstellparameters zu der Ist-Benetzungsqualität, insbesondere der Abweichung, beinhaltet abgerufen und/oder verwendet, wobei der zumindest eine Einstellparameter vorzugsweise in Abhängigkeit des Kennfelds, insbesondere der zumindest einen Funktionskurve, angepasst wird. Das Kennfeld wird dabei bevorzugt vom Steuer- und/oder Regelsystem oder der Erfassungsvorrichtung berechnet, abgerufen und/oder verwendet. Insbesondere wird dabei verglichen welche Benetzungsqualität mit welchem Einstellparameter erreichbar ist. Ferner bevorzugt wird das zumindest eine Kennfeld, insbesondere die zumindest eine Funktionskurve, unter Berücksichtigung zumindest einer Information zur Umgebung, zum Spritzmittel, zum Pflanzenbestand, zum Ausbringelement bzw. zur Spritzdüse und/oder zur Spritze angepasst. Diese Ausführungsform erlaubt eine besonders geringe Rechenleistung des Steuer- und/oder Regelsystem und/oder der Erfassungsvorrichtung, da der wenigstens eine einzustellende Einstellparameter zumindest teilweise durch das Kennfeld, insbesondere die Funktionskurve, vorgegeben ist.

In einer weiteren anderen bevorzugten Weiterbildung des erfindungsgemäßen Verfahrens wird anhand des zumindest einen Kennfelds, insbesondere der zumindest einen Funktionskurve, überprüft ob der zumindest eine Einstellparameter derart angepasst werden kann, dass die Soll-Benetzungsqualität zumindest im Wesentlichen erreicht werden kann. Vorzugsweise wird vom Steuer- und/oder Regelsystem und/oder der Erfassungsvorrichtung vorausschauend überprüft, ob anhand der Ist-Benetzungsqualität, des zumindest einen eingestellten Einstellparameters und/oder des Kennfelds, insbesondere der Funktionskurve, eine kombinierte Anpassung mehrere Einstellparameter zur Erreichung der Soll-Benetzungsqualität möglich ist. Ferner bevorzugt wird ein Bediener, wenn eine Soll-Benetzungsqualität durch ein Anpassen des zumindest einen Einstellparameters nicht erreicht werden kann, informiert und/oder alarmiert. Alternativ oder zusätzlich wird zumindest eine Einstellempfehlung, insbesondere durch das Steuer- und/oder Regelsystem und/oder die Erfassungsvorrichtung, für das Spritzmittel und/oder die Spritze abgerufen und/oder ermittelt. Ferner bevorzugt wird die Einstellempfehlung für den Bediener visualisiert. Die Einstellempfehlung wird dabei vorzugsweise mittels des Steuer- und/oder Regelsystems und/oder der Erfassungsvorrichtung abgerufen und/oder berechnet. Die Einstellempfehlung kann dabei beispielsweise eine Anpassung zur Beeinflussung des Spritzmittels, einer Vorbehandlung zur Beeinflussung der Benetzbarkeit des Pflanzenbestands und/oder zur Beeinflussung der Spritze, insbesondere der Fahrgeschwindigkeit, sein.

Des Weiteren ist bevorzugt, dass zur Beeinflussung der Benetzbarkeit des Pflanzenbestands und/oder der Benetzungseigenschaften des Spritzmittels, dem Spritzmittel zumindest ein Zusatz- und/oder Hilfsstoff zugegeben wird. Diese Ausführungsform ermöglicht es, ein erreichbares Benetzungsspektrum in besonders einfacher Weise zu erweitern und somit die erreichbare Benetzungsqualität noch weiter zu verbessern.

Die der Erfindung zugrunde liegende Aufgabe wird ebenso mit einer landwirtschaftlichen Spritze, insbesondere mit einem Steuer- und/oder Regelsystem, zum Ausbringen von Spritzmittel gelöst, wobei der zumindest eine Einstellparameter auf der Basis der Abweichung anpassbar ist, und dass zur Anpassung des zumindest einen Einstellparameters Daten kabellos, insbesondere über Funk, zwischen der zumindest einen Erfassungsvorrichtung und der Spritze übertragbar sind. Hinsichtlich der Vorteile und Modifikationen der erfindungsgemäßen landwirtschaftlichen Spritze wird zunächst auf die Vorteile und Modifikationen des erfindungsgemäßen Verfahrens verwiesen.

Gemäß einer ersten Ausführungsform der erfindungsgemäßen Spritze ist die Erfassungsvorrichtung als ein Mobilfunkgerät mit zumindest einem optischen Erfassungsmittel ausgebildet. Das, vorzugsweise als Smartphone ausgebildete, Mobilfunkgerät weist dabei eine entsprechende Anwendung, insbesondere App, zur zumindest teilweisen Ausführung des erfindungsgemäßen Verfahrens auf. Das Mobilfunkgerät ist vorzugsweise dazu eingerichtet, die zumindest eine Oberfläche, insbesondere mittels einer Kamera, zu erfassen, die Ist-Benetzungsqualität und/oder eine Abweichung der Ist-Benetzungsqualität zur Soll-Benetzungsqualität zu ermitteln, und/oder den zumindest einen Einstellparameter der Spritze anzupassen. Ferner ist die Erfassungsvorrichtung dazu eingerichtet, eine Bildaufnahme zu erzeugen und/oder die zumindest eine erfasste Oberfläche, insbesondere ein Foto der zumindest einen Oberfläche, hinsichtlich der Benetzungsqualität auszuwerten.

Als Mobilfunkgerät ausgebildete Erfassungsvorrichtungen sind zur zumindest teilweisen Ausführung des erfindungsgemäßen Verfahrens besonders gut geeignet. Mobilfunkgeräte weisen typischerweise gegenüber herkömmlichen landwirtschaftlichen Spritzen, insbesondere deren Steuer- und/oder Regelsysteme, höhere Rechenleistungen bzw. Rechenkapazitäten auf. Darüber hinaus ist durch eine mobil ausgeführte Erfassungsvorrichtung eine besonders einfache Anpassbarkeit der Erfassungsvorrichtung erreicht. Beispielsweise kann eine jeweilige Erfassungsvorrichtung durch eine andere Erfassungsvorrichtung mit anderen Spezifikationen ausgetauscht werden, um die Erfassung an den jeweiligen Bedarf, insbesondere das Spritzmittel und/oder den Pflanzenbestand, abzustimmen. Alternativ oder zusätzlich ist denkbar, dass die als Mobilfunkgerät ausgebildete Erfassungsvorrichtung mittels optionaler und/oder extern verbindbarer Erfassungsmittel erweiterbar ist. Somit ist beispielsweise der Einsatzbereich derartiger Erfassungsmittel in einfacher Weise noch weiter gesteigert.

Ferner bevorzugt ist das zumindest eine Erfassungsmittel dazu eingerichtet, eine Wärmebildaufnahme, insbesondere Infrarot- und/oder Thermalaufnahme, eine 3D-Aufnahme, Spektral- und/oder stereoskopische Aufnahme der zumindest einen benetzten Oberfläche zu erzeugen.

Des Weiteren ist ein internes und/oder externes Beleuchtungsmittel bevorzugt, welches dazu eingerichtet ist, die zumindest eine benetzte Oberfläche zur Erfassung auszuleuchten. Vorzugsweise sind das Beleuchtungsmittel und das Spritzmittel, insbesondere ein zugegebener Zusatzstoff, derart aufeinander abgestimmt, dass das Spritzmittel, insbesondere der Zusatzstoff, auf der zumindest einen Oberfläche für die Erfassung nach Art einer Fluoreszenz reagiert.

Des Weiteren ist eine Ausführungsform bevorzugt bei der überprüft werden kann, ob zu einer mittels der Erfassungsvorrichtung ermittelten Tropfengröße, dem ermittelten Tropfenspektrum, der ermittelten Tropfenform und/oder dem ermittelten Tropfenformspektrum ein Spritzmittel in einer Spritzmitteldatenbank hinterlegt ist.

Gemäß einer zweiten Ausführungsform der erfindungsgemäßen Spritze ist die Erfassungsvorrichtung, vorzugsweise als Sensoranordnung, zumindest teilweise aus der Oberfläche gebildet. Hierbei ist die zumindest eine Oberfläche zumindest ein Teil der Erfassungsvorrichtung die vorzugsweise zumindest eine Sensoroberfläche der Erfassungsvorrichtung bildet. Somit wird dabei während der Ausbringung auch die Erfassungsvorrichtung selbst zumindest teilweise mit Spritzmittel benetzt. Bevorzugt ist die Erfassungsvorrichtung hierbei nach Art eines, insbesondere mobilen, Funksensors ausgebildet, wobei mehrere Funksensoren besonders bevorzugt sind. Die Erfassungsvorrichtung ist besonders bevorzugt dazu eingerichtet, einen elektrischen Widerstand der zumindest einen benetzten Oberfläche, insbesondere eine Widerstandsänderung zwischen einem unbenetzten und benetzten Zustand der zumindest einen Oberfläche, zu erfassen. Alternativ oder zusätzlich ist die Erfassungsvorrichtung dazu eingerichtet, eine Temperaturänderung, zumindest einen Bestandteil des Spritzmittels und/oder eine Bildaufnahme der zumindest einen Oberfläche zu erfassen. Derartige Erfassungsvorrichtungen zeichnen sich insbesondere durch die besonders einfache Herstellung aus. Außerdem können die bevorzugt als Funksensoren ausgebildeten Erfassungsvorrichtungen auf ihre besonders speziellen Einsatzgebiete ausgelegt und/oder abgestimmt werden, was wiederrum die Erfassungsqualität bzw. Erfassungsgenauigkeit noch weiter steigert.

Vorzugsweise ist die Erfassungsvorrichtung hierbei auf der landwirtschaftlichen Nutzfläche und/oder dem Pflanzenbestand auslegbar und/oder anbringbar.

In einer anderen bevorzugten Ausführungsform der erfindungsgemäßen Spritze bildet die wenigstens eine Oberfläche zumindest teilweise ein auslegbares und/oder anbringbares Haft- und/oder Auffangelement. Das Material aus dem das Haft- und/oder Auffangelement gebildet ist, ist dabei bevorzugt Papier und/oder Kunststoff, insbesondere mit und/oder ohne zusätzlicher Beschichtung. Besonders bevorzugt ist dabei ein Spritzmittel-, insbesondere Wasser-, -sensitives Material, welches eine zumindest teilweise Verfärbung des Materials bei Kontakt mit dem Spritzmittel und/oder einem Zusatzstoff hervorruft. Alternativ oder zusätzlich weist die Oberfläche hierbei eine, insbesondere auf die Blattstruktur und/oder Blattgeometrie des Pflanzenbestands abgestimmte, Rauheit und/oder Form auf, insbesondere um die Blätter zumindest im Wesentlichen nachzubilden. Die zumindest eine Oberfläche ist dabei entlang der landwirtschaftlichen Nutzfläche, insbesondere auf dem Ackerboden, und/oder auf dem Pflanzenbestand, insbesondere am Stängel und/oder Blatt, positionierbar. Alternativ oder zusätzlich sind auch mehrere Oberflächen, insbesondere Haft- und/oder Auffangelemente, an jeweils einer Pflanze des Pflanzenbestands positionierbar. Somit sind bevorzugt mehrere Oberflächen entlang des Stängels auf unterschiedlichen Höhen positionierbar, um neben der Benetzung beispielsweise auch die Durchdringung des Spritzmittels zu ermitteln. Besonders vorteilhaft bei dieser Ausführungsform ist, dass die Eigenschaften der zu erfassenden Oberfläche, insbesondere des Haft- und/oder Auffangelementes, zumindest im Wesentlichen untereinander gleich sind. Somit ist bei mehreren erfassten Oberflächen eine verbesserte Vergleichbarkeit der Benetzung und damit eine gesteigerte Erfassungsqualität bzw. Erfassungsgenauigkeit erreicht.

Alternativ oder zusätzlich kann die zumindest eine Erfassungsvorrichtung und/oder die Oberfläche neben der landwirtschaftlichen Nutzfläche auslegbar und/oder anbringbar sein, um beispielsweise ein Abdrift des Spritzmittels zu ermitteln.

Darüber hinaus ist eine landwirtschaftliche Spritze bevorzugt die alternativ oder zusätzlich zumindest eine, insbesondere am Gestänge, angeordnete Sensoreinheit umfasst und die dazu eingerichtet ist, zumindest eine Oberfläche des Pflanzenbestands, insbesondere während der Ausbringung, in einem benetzten Zustand zu erfassen und somit eine, insbesondere erste, Benetzungsqualität ermittelbar. Bei einer ferner bevorzugten Ausführungsform der erfindungsgemäßen Spritze ist die Ist-Benetzungsqualität, insbesondere die Abweichung, auf der Basis der mittels der zumindest einen Sensoreinheit und der Erfassungsvorrichtung erfassbaren Oberflächen ermittelbar. Somit wird hierbei eine tatsächliche Benetzungsqualität bzw. die Ist-Benetzungsqualität sowohl aus den Daten der Erfassungsvorrichtung und der auslegbaren und/oder anbringbaren Oberfläche als auch aus den Daten der, insbesondere an der Spritze bzw. am Gestänge angeordneten, Sensoreinheit, insbesondere der ersten Benetzungsqualität, ermittelt. Somit sind zur Anpassung des zumindest einen Einstellparameters hierbei sowohl die Daten der Sensoreinheit an der Spritze als auch der mobilen Erfassungsvorrichtung berücksichtigbar

in einer besonders bevorzugten Weiterbildung der erfindungsgemäßen Spritze ist die zumindest eine Sensoreinheit mittels der zumindest einen Erfassungsvorrichtung, insbesondere auf der Basis der zumindest einen mittels der Erfassungsvorrichtung erfassbaren Oberfläche, kalibrierbar.

Bei einer weiteren besonders bevorzugten Ausführungsform der erfindungsgemäßen Spritze ist die landwirtschaftliche Spritze, insbesondere das Steuer- und/oder Regelsystem, dazu eingerichtet, das erfindungsgemäße Verfahren zum Ausbringen von Spritzmittel auszuführen.

Weitere Einzelheiten der Erfindung sind der Beispielsbeschreibung und den Zeichnungen zu entnehmen. Die Zeichnungen zeigen
- Fig.1: eine perspektivische Heckansicht einer landwirtschaftlichen Spritze mit einem ersten Ausführungsbeispiel einer erfindungsgemäßen Erfassungsvorrichtung;
- Fig.2a: ein zweites Ausführungsbeispiel einer erfindungsgemäßen Erfassungsvorrichtung in perspektivischer Ansicht;
- Fig.2b: die Erfassungsvorrichtung aus Fig.2a in einer Detailansicht;
- Fig.3a: ein drittes Ausführungsbeispiel einer erfindungsgemäßen Erfassungsvorrichtung in perspektivischer Ansicht;
- Fig.3b: die Erfassungsvorrichtung aus Fig.3a in einer Detailansicht; und
- Fig.4: ein viertes Ausführungsbeispiel einer erfindungsgemäßen Erfassungsvorrichtung in perspektivischer Ansicht.

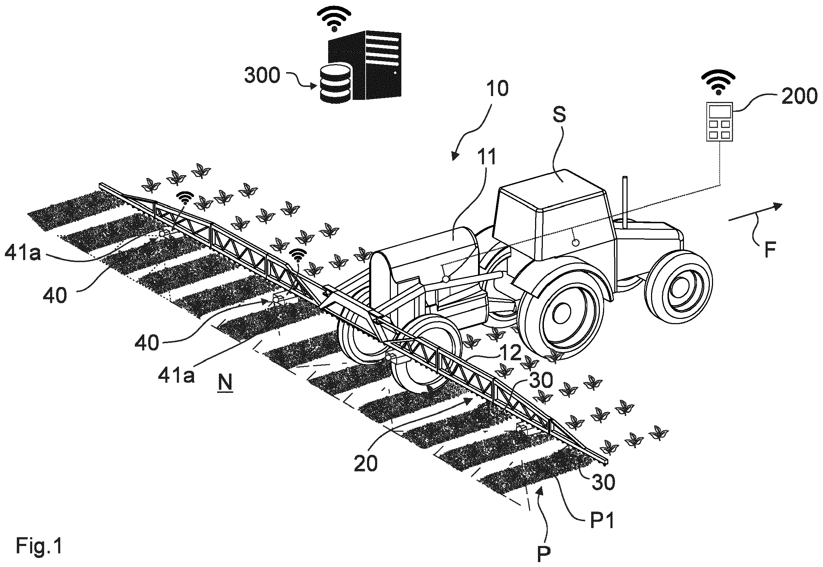

Eine von einem Schlepper S gezogene landwirtschaftliche Spritze 10 ist in der Fig.1 gezeigt. Alternativ zum gezeigten Ausführungsbeispiel kann die landwirtschaftliche Spritze 10 auch selbstfahrend oder von dem Schlepper S tragbar ausgebildet sein.

Es ist zu erkennen, dass die Spritze 10 ein quer zu einer Fahrtrichtung F ausklappbares und daran angeordnetes Gestänge 12 umfasst. Weiterhin umfasst die Spritze 10 ein in den Figuren nicht gezeigtes spritzmittelleitendes- und/oderförderndes Fördersystem zum Zubringen eines Spritzmittels 30, insbesondere Pflanzenschutz- und/oder Düngemittels, aus einem Vorratsbehälter 11 der Spritze 10 zu mehreren nebeneinander an dem Gestänge 12 angeordneten Ausbringelementen 20, insbesondere Spritzdüsen 21. Die Ausbringelemente 20, insbesondere Spritzdüsen 21, sind dazu eingerichtet, das Spritzmittel 30 auf der Basis zumindest eines Einstellparameters auf einem Pflanzenbestand P einer landwirtschaftlichen Nutzfläche N auszubringen. Dabei wird zumindest eine Oberfläche P1 des Pflanzenbestands P zumindest teilweise mit dem Spritzmittel 30 benetzt. Es ist weiterhin zu sehen, dass die Spritze 10 mehrere gemäß einem ersten erfindungsgemäßen Ausführungsbeispiel ausgebildete Erfassungsvorrichtungen 40 umfasst, die dazu eingerichtet sind, die zumindest eine Oberfläche P1 des Pflanzenbestands P in einem benetzten Zustand zu erfassen. Des Weiteren wird unter der Berücksichtigung einer mittels der erfassten Oberfläche P1 ermittelten Ist-Benetzungsqualität und einer vorgebbaren und/oder abrufbaren Soll-Benetzungsqualität der zumindest einen Oberfläche P1 eine Abweichung der Benetzungsqualität ermittelt.

Auf Basis dieser Abweichung wird dann der zumindest eine Einstellparameter angepasst, wobei die Daten zur Ermittlung dieser Abweichung zumindest teilweise kabellos, insbesondere über Funk, zwischen der zumindest einen Erfassungsvorrichtung 40 und der Spritze 10, insbesondere einem der Spritze 10 zugeordneten Steuer- und/oder Regelsystem 200, übertragen werden.

Der zumindest eine Einstellparameter stellt hierbei eine Einstellung und/oder Parametrierung der Spritze 10, insbesondere zumindest einer Einrichtung des Fördersystems und/oder des Ausbringelements 20, dar, der einen Durchfluss, insbesondere eine Durchflussmenge, eine Ausbringmenge und/oder einen Druck des Spritzmittels 30 innerhalb des zumindest einen Fördersystems, Ausbringelements 20 und/oder im Bereich des Ausbringelements 20 zumindest teilweise beeinflusst.

Weiterhin ist in der Fig.1 eine dezentrale Rechnereinheit bzw. ein Server 300, insbesondere ein dezentrales Steuer- und/oder Regelsystem, zu sehen. Der Server 300 wird hierbei alternativ oder zusätzlich zur Übertragung der Daten, insbesondere zum Abrufen und/oder Vorgeben der Soll-Benetzungsqualität und/oder zur Ermittlung der Ist-Benetzungsqualität und/oder der Abweichung der Benetzungsqualität genutzt. Hierzu sind die Daten zumindest teilweise kabellos zwischen der Erfassungsvorrichtung 40, der Spritze 10, insbesondere dem Steuer- und/oder Regelsystem 200, und dem Server 300 übertragbar.

Die Erfassungsvorrichtung 40 ist dabei als eine Sensoreinheit 41a zur berührungslosen Erfassung der zumindest einen benetzten Oberfläche P1 ausgebildet. Ferner sind mehrere jeweils als Sensoreinheit 41a ausgebildete Erfassungsvorrichtungen 40 an der Spritze 10, insbesondere entlang des Gestänges 12, angeordnet und auf den Pflanzenbestand P ausgerichtet.

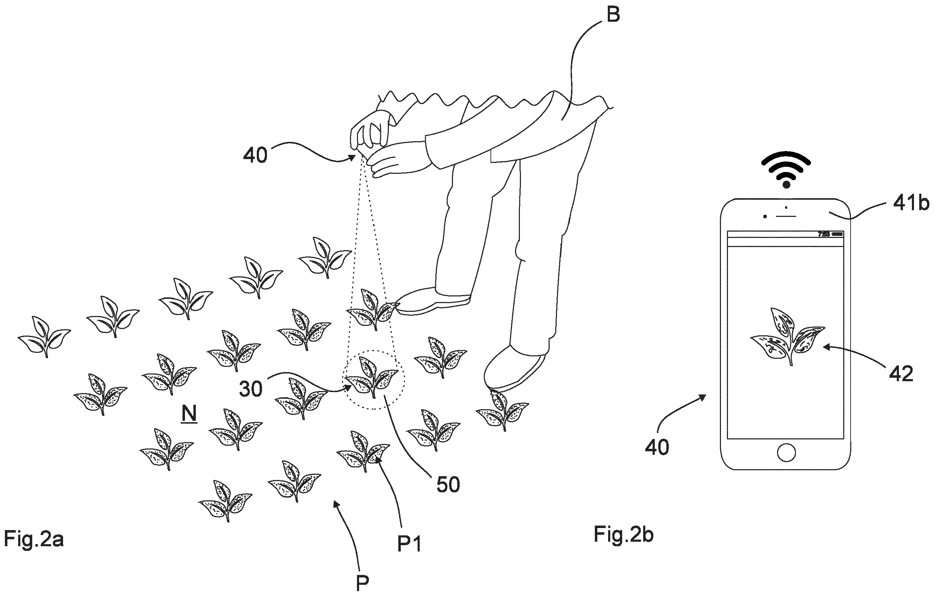

Die Fig.2a und 2b zeigen ein beispielhaftes zweites erfindungsgemäßes Ausführungsbeispiel der Erfassungsvorrichtung 40, bei der die Erfassungsvorrichtung 40 als ein Mobilfunkgerät 41b, insbesondere Smartphone, ausgebildet ist. in der Fig.2a ist ein Bediener B bzw. Benutzer an einem Pflanzenbestand P zu sehen, wobei die Oberfläche P1 des Pflanzenbestands P mit Spritzmittel 30 benetzt ist. Der Benutzer B trägt die Erfassungsvorrichtung 40 hierbei entlang der landwirtschaftlichen Nutzfläche N und/oder dem Pflanzenbestand P und richtet dabei die Erfassungsvorrichtung 40 auf die Oberfläche P1, insbesondere das benetzte Blatt, aus und erzeugt mittels einem in der Erfassungsvorrichtung 40 angeordneten optischen Erfassungsmittel, insbesondere einer Kamera, eine Bildaufnahme 42 der zumindest einen Oberfläche P1. Die Fig.2b zeigt die erzeugte Bildaufnahme 42 der Oberfläche P1 auf der Erfassungsvorrichtung 40, insbesondere dem Mobilfunkgerät 41b.

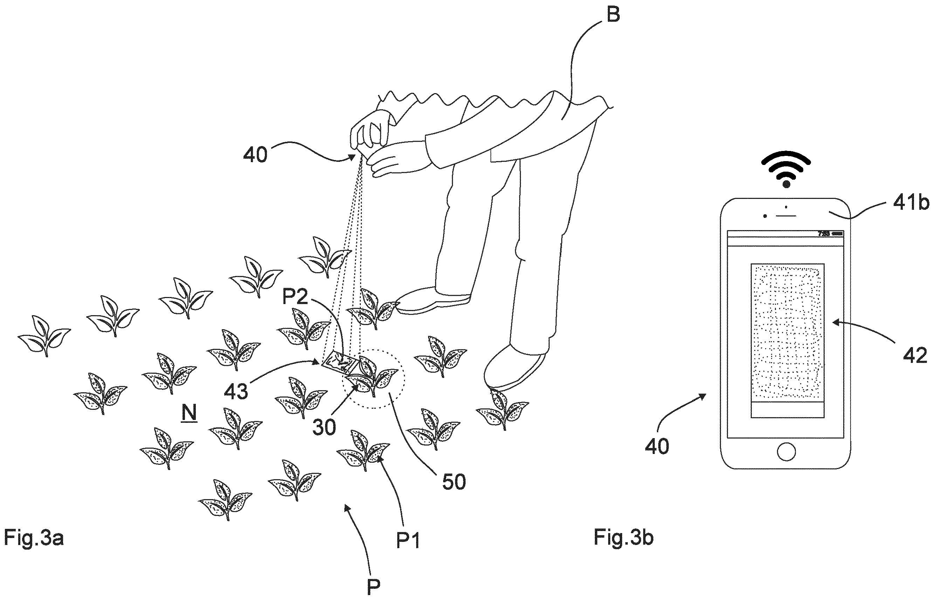

Die Fig.3a und 3b zeigen weiterhin ein beispielhaftes drittes erfindungsgemäßes Ausführungsbeispiel der Erfassungsvorrichtung 40, bei der die Erfassungsvorrichtung 40 als Mobilfunkgerät 41b, insbesondere Smartphone, ausgebildet ist. Hierbei bildet eine mit Spritzmittel 30 zu benetzende Oberfläche P2 ein auslegbares und/oder anbringbares Haft- und/oder Auffangelement 43 wie in der Fig.3a gezeigt ist. Das Haft- und/oder Auffangelement 43 stellt dabei einen, insbesondere wassersensitiven, Papierstreifen dar, der am Pflanzenstängel und/oder am Pflanzenblatt zumindest einer Nutzpflanze anbringbar ist. Alternativ oder zusätzlich sind dabei auch andere Arten und/oder Formen von Haft- und/oder Auffangelementen 43 mit einer benetzbaren Oberfläche P2 für das Spritzmittel 30 denkbar, die dazu eingerichtet sind, das Spritzmittel 30, insbesondere einzelne Tropfen, zumindest teilweise aufzufangen und/oder aufzunehmen.

Das Haft- und/oder Auffangelement 43, insbesondere die Oberfläche P2, wird dabei vor der Ausbringung des Spritzmittels 30 auf der landwirtschaftlichen Nutzfläche N, insbesondere an zumindest einer Nutzpflanze des Pflanzenbestands P, positioniert bzw. angebracht und/oder ausgelegt. Somit wird das Haft- und/oder Auffangelement 43, insbesondere die zumindest eine Oberfläche P2, während des Ausbringvorgangs zumindest teilweise mit Spritzmittel 30 benetzt. Im Anschluss an die Benetzung trägt der Benutzer B die Erfassungsvorrichtung 40 zum benetzten Haft- und/oder Auffangelement 43. Mit der Erfassungsvorrichtung 40, insbesondere mittels der Kamera, wird die benetzte Oberfläche P2 vom Benutzer erfasst. Die so erzeugte Bildaufnahme 42 des Haft- und/oder Auffangelements 43, insbesondere der Oberfläche P2, wie in Fig.3b zu sehen ist, wird somit zur Ermittlung der Ist-Benetzungsqualität genutzt. Bei diesem Ausführungsbeispiel wird auf Basis der erfassten Benetzung der zumindest einen Oberfläche P2, insbesondere dem Haft- und/oder Auffangelement 43, die Ist-Benetzungsqualität der zumindest einen Oberfläche P1, insbesondere des Pflanzenbestands P, ermittelt.

Die in den jeweiligen Ausführungsbeispielen aus Fig.1 bis Fig.3b gezeigte Erfassungsvorrichtung 40 ist dazu eingerichtet, die benetzte Oberfläche P1, P2, insbesondere die darauf befindlichen einzelnen Tropfen des Spritzmittels 30, berührungslos, zu erfassen. Die Erfassung kann dabei neben mittels Bildaufnahme 42 alternativ oder zusätzlich durch Wärme-, insbesondere Infrarot- und/oder Thermal-, 3D-, Spektral- und/oder stereoskopische Aufnahmen realisiert sein. Denkbar ist, dass beispielsweise durch erfassbare Temperatur-, Farb- und/oder Strukturdiffrenzen der Oberfläche P1, P2 die Ist-Benetzungsqualität der Oberfläche P1 ermittelt werden kann.

Des Weiteren ist denkbar, dass dem Spritzmittel 30 vor und/oder während der Ausbringung ein auf die Erfassungsvorrichtung 40 abgestimmter Zusatzstoff zugegeben wird. Beispielsweise kann der Zusatzstoff nach Art der Fluoreszenz ausgebildet sein. Somit kann beispielsweise eine höhere Erfassungsgenauigkeit der benetzten Oberfläche P1, P2 durch die Erfassungsvorrichtung 40 erreicht werden.

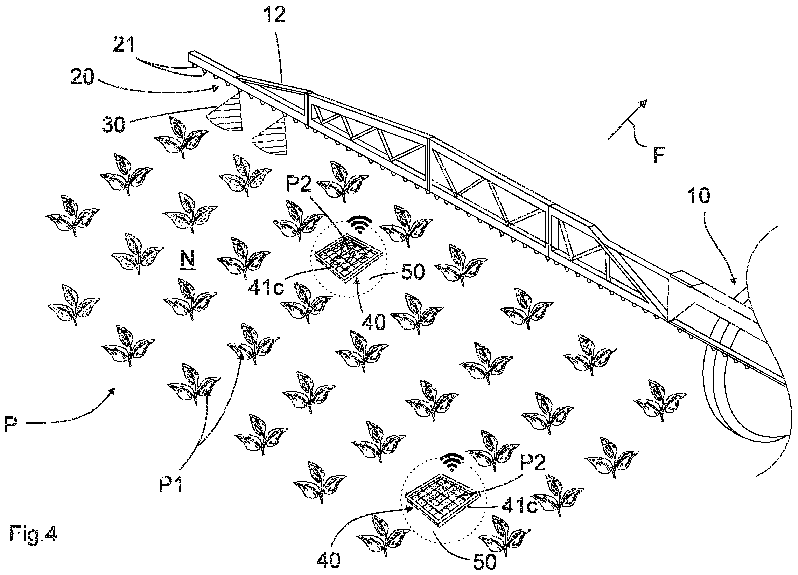

Weiterhin zeigt die Fig.4 ein beispielhaftes viertes erfindungsgemäßes Ausführungsbeispiel der Erfassungsvorrichtung 40 während der Ausbringung des Spritzmittels 30. Die Erfassungsvorrichtung 40 wird dabei zumindest teilweise aus der Oberfläche P2 gebildet. Ferner ist die Erfassungsvorrichtung 40 als eine Sensoranordnung 41c, insbesondere als ein Funksensor, ausgebildet. Der Funksensor 41c wird dabei vor der Ausbringung auf der landwirtschaftlichen Nutzfläche N, insbesondere zwischen einzelnen Nutzpflanzen des Pflanzenbestands P, ausgelegt und/oder angebracht. Alternativ oder zusätzlich sind auch Funksensoren 41c denkbar die am Pflanzenbestand P anbringbar sind.

im gezeigten Ausführungsbeispiel wird somit während der Ausbringungen neben der Oberfläche P2 auch die Erfassungsvorrichtung 40 selbst mit Spritzmittel 30 benetzt.

Die Erfassungsvorrichtung 40, insbesondere der Funksensor 41c, ist hierbei dazu eingerichtet, das auf der Oberfläche P2 befindliche Spritzmittel 30, insbesondere die einzelnen Tropfen, zu erfassen. Dazu wird insbesondere eine elektrische Größe, insbesondere eine Änderung einer elektrischen Größe, aufgrund des auf der Oberfläche P2 aufgebrachten Spritzmittels 30 durch den Funksensor 41c detektiert. Beispielsweise kann eine derartige elektrische Größe eine elektrische Spannung, Stromstärke oder ein Widerstand sein. Alternativ oder zusätzlich ist auch denkbar, dass der Funksensor 41c die Oberfläche P2 und das darauf aufgetragene Spritzmittel 30 mittels Bild-, Wärme-, insbesondere Infrarot- und/oder Thermal-, 3D-, Spektral- und/oder stereoskopische Aufnahmen erfasst.

Um bei den beschriebenen Ausführungsbeispielen eine geeignete Position zur Erfassung der zumindest einen Oberfläche P1, P2 zu lokalisieren, wird zuvor zumindest eine Soll-Position 50 entlang der landwirtschaftlichen Nutzfläche N und/oder des Pflanzenbestands P ermittelt und/oder abgerufen. Das Ermitteln und/oder Abrufen der Soll-Position 50 wird dabei von der Erfassungsvorrichtung 40 ausgeführt. Ferner wird dem Bediener B bzw. Benutzer die zumindest eine Soll-Position 50, insbesondere mittels der Erfassungsvorrichtung 40 und/oder einem der Spritze 10 zugeordneten Bedien- und/oder Anzeigemittels, visualisiert. Die Soll-Position 50 wird dann zum Tragen der Erfassungsvorrichtung 40 und/oder zum Auslegen und/oder Anbringen der zumindest einen Oberfläche P1, P2 berücksichtigt. Vorstellbar ist, dass die Soll-Position 50 dem Benutzer B anhand von Koordinaten und/oder Rastern der landwirtschaftlichen Nutzfläche N vorgegeben und/oder vorgeschlagen wird.

Alternativ hierzu ist auch denkbar, dass der Benutzer B die zumindest eine Soll-Position 50 für die zumindest einen Oberfläche P1, P2 anhand von Erfahrungen oder beliebig bestimmt und/oder festlegt. Ferner ist alternativ denkbar, dass die zumindest eine Soll-Position 50 auch mittels der Spritze 10, insbesondere dem Steuer- und/oder Regelsystem 200, und/oder dem Server 300 ermittelt, abgerufen und/oder visualisiert wird.

Alternativ zu den gezeigten Ausführungsbeispiel können auch mehrere Oberflächen P2 auf der landwirtschaftlichen Nutzfläche N und/oder entlang des Pflanzenbestands P ausgelegt und/oder angebracht und mittels der Erfassungsvorrichtung 40 erfasst werden, wobei zur Ermittlung der Ist-Benetzungsqualität die Gesamtheit der erfassten Oberflächen P1, P2 berücksichtigt wird.

Die Ermittlung der Ist-Benetzungsqualität und/oder der Abweichung zwischen der Ist-Benetzungsqualität und der Soll-Benetzungsqualität wird in den gezeigten Ausführungsbeispielen von der Erfassungsvorrichtung 40 übernommen. Hierbei wird die Soll-Benetzungsqualität, in Abhängigkeit des Pflanzenbestands P, des Spritzmittels 30 und/oder der Ausbringelemente 20 von der Erfassungsvorrichtung 40 abgerufen und/oder vorgegeben. Alternativ oder zusätzlich werden hierzu Informationen, insbesondere von der Spritze 10 und/oder dem Server 300, an die Erfassungsvorrichtung 40 übermittelt. Derartige Informationen umfassen Daten zur Spritze 10, insbesondere der Einstellungen und/oder Parametrierungen, zur Umgebung, insbesondere Temperatur, Feuchtigkeit, Windrichtung und/oderstärke, und/oder zum Pflanzenbestand P, insbesondere dessen Art, Größe und/oder Entwicklungsstadium.

Alternativ oder zusätzlich hierzu ist denkbar, dass die Ermittlung der Abweichung zwischen der Ist-Benetzungsqualität und der Soll-Benetzungsqualität zumindest teilweise von der Spritze 10, insbesondere dem dazu zugeordneten Steuer- und/oder Regelsystem 200, und/oder dem dezentralen Server 300 durchgeführt wird.

Darüber hinaus wird der zumindest eine zuvor eingestellte Einstellparameter der Spritze 10 durch die Erfassungsvorrichtung 40 auf der Basis der Ist-Benetzungsqualität und der ermittelten Abweichung zur Soll-Benetzungsqualität auf den neu ermittelten Einstellparameter angepasst. Alternativ oder zusätzlich wird bei der Ermittlung des neuen Einstellparameters der zuvor eingestellte Einstellparameter berücksichtigt.

Hierbei wird außerdem die ermittelte Abweichung der Benetzungsqualität und/oder der neu ermittelte und/oder abgerufene Einstellparameter über die Erfassungsvorrichtung 40 und/oder die Spritze 10, insbesondere dem dazu zugeordneten Bedien- und/oder Anzeigemittel, dem Bediener B bzw. Benutzer visualisiert. Des Weiteren wird durch den Benutzer B der zumindest eine zuvor eingestellte Einstellparameter vom neun Einstellparameter ersetzt. Hierzu wird der neu ermittelte Einstellparameter dem Benutzer B vorgeschlagen und durch ein manuelles Betätigen als neuer Einstellparameter für die Spritze 10, insbesondere zumindest eine Einrichtung der Spritze 10, übernommen. Alternativ hierzu kann die Erfassungsvorrichtung 40 den Einstellparameter auch automatisiert auf der Basis der Abweichung der Benetzungsqualität anpassen.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Beispielsweise ist denkbar, dass die gezeigten Ausführungsbeispiele beliebig untereinander kombinierbar sind. Weiterhin versteht es sich, dass in den Figuren gezeigte Geometrien nur beispielhaft sind und auch in beliebigen anderen Ausgestaltungen möglich sind.

In einem speziellen weitern nicht gezeigten Ausführungsbeispiel kann beispielsweise die an der Spritze 10 angeordnete und als Sensoreinheit 41a ausgebildete Erfassungsvorrichtung 40 mit der tragbaren Erfassungsvorrichtung 40 und den auslegbaren und/oder anbringbaren Oberflächen P2 aus den Fig.2a - 4 kombiniert, und insbesondere mittels dieser kalibriert, werden. Somit wird bei einem derartigen Ausführungsbeispiel die Ist-Benetzungsqualität, insbesondere die Abweichung zwischen der Ist-Benetzungsqualität und der Soll-Benetzungsqualität, auf der Basis der mittels der als Sensoreinheit 41a und der als Mobilfunkgerät 41b ausgebildeten Erfassungsvorrichtung 40 ermittelt.

Alternativ oder zusätzlich ist auf dem Steuer- und/oder Regelsystem 200 und/oder der Erfassungsvorrichtung 40, insbesondere dem Mobilfunkgerät 41b, ein Kennfeld, insbesondere mit zumindest einer Funktionskurve, hinterlegbar und/oder durch diese abrufbar. Ferner ist das Kennfeld, insbesondere die zumindest eine Funktionskurve, vom Steuer- und/oder Regelsystem 200 und/oder der Erfassungsvorrichtung 40, insbesondere dem Mobilfunkgerät 41b, berechenbar und verwendbar. Das Kennfeld, insbesondere die zumindest eine Funktionskurve, beinhaltet und/oder spiegelt eine Abhängigkeit des zumindest einen Einstellparameters zu der Ist-Benetzungsqualität, insbesondere der Abweichung, wieder. Hierbei wird zur Anpassung des zumindest einen Einstellparameters das Kennfeld, insbesondere die zumindest eine Funktionskurve, vom Steuer- und/oder Regelsystem 200 und/oder der Erfassungsvorrichtung 40, berücksichtigt. Alternativ oder zusätzlich ist hierbei denkbar, dass das Kennfeld, insbesondere die zumindest eine Funktionskurve, unter Berücksichtigung zumindest einer Information zur Umgebung, zum Spritzmittel 30, zum Pflanzenbestand P, zur Spritzdüse 21 und/oder zur Spritze 10 vom Steuer- und/oder Regelsystem 200 und/oder der Erfassungsvorrichtung 40 anpassbar ist. Das Kennfeld, insbesondere die Funktionskurve, ist somit zumindest teilweise und/oder innerhalb eines vorgegebenen Bereichs verzerrbar. Beispielsweise kann das jeweilige Kennfeld, insbesondere die Funktionskurve, in Abhängigkeit einer aktivierten Spritzdüse 21 abrufbar und/oder anpassbar sein.

Ferner alternativ oder zusätzlich ist der zumindest eine Einstellparameter anhand des Kennfelds, insbesondere der zumindest einen Funktionskurve, dabei derart vom Steuer- und/oder Regelsystem 200 und/oder der Erfassungsvorrichtung 40 anpassbar, dass die Soll-Benetzungsqualität zumindest im Wesentlichen erreicht wird. Hierzu ist alternativ oder zusätzlich eine Einstellempfehlung für das Spritzmittel 30 und/oder die Spritze 10 vom Steuer- und/oder Regelsystem 200 und/oder der Erfassungsvorrichtung 40 anhand des Kennfelds, insbesondere der Funktionskurve, abrufbar und/oder ermittelbar. Ferner wird eine ermittelte oder berechnete Einstellempfehlung dem Bediener B visualisiert. Darüber hinaus ist denkbar, dass der Bediener B alternativ oder zusätzlich, in einem Fall bei dem eine Soll-Benetzungsqualität durch ein Anpassen des zumindest einen Einstellparameters nicht erreichbar ist, informiert oder alarmiert wird.

### Bezugszeichenliste

- 10: Landwirtschaftliche Spritze
- 11: Vorratsbehälter
- 12: Gestänge
- 20: Ausbringelemente
- 21: Spritzdüse
- 30: Spritzmittel
- 40: Erfassungsvorrichtung
- 41a: Sensoreinheit
- 41b: Mobilfunkgerät
- 41c: Sensoranordnung, Funksensor
- 42: Bildaufnahme
- 43: Haft- und/oder Auffangelement
- 50: Soll-Position
- 200: Steuer- und/oder Regelsystem
- 300: Server

- B: Benutzer, Bediener
- F: Fahrtrichtung
- N: Landwirtschaftliche Nutzfläche
- P: Pflanzenbestand, Nutzpflanze
- P1: benetzte Oberfläche des Pflanzenbestands
- P2: benetzte Oberfläche
- S: Schlepper

## Patentansprüche

1. Verfahren zum Ausbringen von Spritzmittel (30), insbesondere Pflanzenschutz- und/oder Düngemittel, mit den Schritten:
a) Ausbringen des Spritzmittels (30) mittels einer landwirtschaftlichen Spritze (10), auf einer landwirtschaftlichen Nutzfläche (N) und/oder dessen Pflanzenbestands (P), mit zumindest einem eingestellten Einstellparameter;
b) Benetzen zumindest einer Oberfläche (P1) mit dem Spritzmittel (30);
c) Erfassen der zumindest einen benetzten Oberfläche (P1) mittels zumindest einer der Spritze (10) zugeordneten Erfassungsvorrichtung (40);
d) Ermitteln einer Ist-Benetzungsqualität anhand der zumindest einen erfassten Oberfläche (P1);
e) Ermitteln zumindest einer Abweichung der Ist-Benetzungsqualität zu einer abrufbaren und/oder vorgebbaren Soll-Benetzungsqualität;
**gekennzeichnet durch** die folgenden Schritte:
f) Anpassen des zumindest einen Einstellparameters auf der Basis der zumindest einen Abweichung; wobei zur Anpassung des zumindest einen Einstellparameters Daten zumindest teilweise kabellos, insbesondere über Funk, zwischen der zumindest einen Erfassungsvorrichtung (40) und der Spritze (10), insbesondere einem Steuer- und/oder Regelsystem (200), übertragen werden,
g) Erfassen der zumindest einen benetzten Oberfläche (P1) durch Tragen der zumindest einen Erfassungsvorrichtung (40) entlang der landwirtschaftlichen Nutzfläche (N) und/oder des Pflanzenbestands (P) durch einen Bediener (B).

2. Verfahren nach Anspruch 1, **dadurch gekennzeichnet, dass** zumindest einer der Schritte d) bis f) von der zumindest einen Erfassungsvorrichtung (40) ausgeführt wird.

3. Verfahren nach zumindest einem der vorgenannten Ansprüche,
**gekennzeichnet durch** zumindest einen der folgenden Schritte:
h) Auslegen und/oder Anbringen der zumindest einen Oberfläche (P2) entlang der landwirtschaftlichen Nutzfläche (N) und/oder des Pflanzenbestands (P).

4. Verfahren nach Anspruch 3, **gekennzeichnet durch** den Schritt:
i) Ermitteln und/oder Abrufen zumindest einer Soll-Position (50) entlang der landwirtschaftlichen Nutzfläche (N) und/oder des Pflanzenbestands (P); und
j) Visualisieren der zumindest einer Soll-Position (50) für einen Bediener; wobei die Soll-Position (50) zur Ausführung zumindest einer der Schritte g) und h) berücksichtigt wird.

5. Verfahren nach zumindest einem der vorgenannten Ansprüche,
**gekennzeichnet durch** zumindest einen der folgenden Schritte:
k) Visualisieren der zumindest einen Abweichung für einen Bediener; und/oder
l) Visualisieren zumindest eines neuen auf der Basis der Abweichung ermittelten und/oder abgerufenen Einstellparameters; und
m)Ersetzen des zumindest einen Einstellparameters durch den ermittelten und/oder abgerufenen Einstellparameter von dem Bediener.

6. Verfahren nach zumindest einem der vorgenannten Ansprüche,
**gekennzeichnet durch** den Schritt:
n) Übermitteln zumindest einer Information zur Umgebung, zum Spritzmittel (30), zum Pflanzenbestand (P) und/oder zur Spritze (10), insbesondere zum Einstellparameter, an die zumindest eine Erfassungsvorrichtung (40).

7. Verfahren nach zumindest einem der vorgenannten Ansprüche,
**gekennzeichnet durch** zumindest einen der folgenden Schritte:
o) Abrufen und/oder Verwenden zumindest eines Kennfelds, vorzugsweise mit zumindest einer Funktionskurve, welches eine Abhängigkeit des zumindest einen Einstellparameters zu der Ist-Benetzungsqualität, insbesondere der Abweichung, beinhaltet; wobei der zumindest eine Einstellparameter vorzugsweise in Abhängigkeit des Kennfelds, insbesondere der zumindest einen Funktionskurve, angepasst wird; und/oder
p) Anpassen des zumindest einen Kennfelds, vorzugsweise der zumindest einen Funktionskurve, unter Berücksichtigung zumindest einer Information zur Umgebung, zum Spritzmittel, zum Pflanzenbestand, zur Spritzdüse und/oder zur Spritze.

8. Verfahren nach Anspruch 7, **gekennzeichnet durch** die Schritte:
q) Überprüfen anhand des zumindest einen Kennfelds, insbesondere der zumindest einen Funktionskurve, ob der zumindest eine Einstellparameter derart angepasst werden kann, dass die Soll-Benetzungsqualität zumindest im Wesentlichen erreicht werden kann; und
r) Informieren und/oder Alarmieren eines Bedieners, wenn eine Soll-Benetzungsqualität durch ein Anpassen des zumindest einen Einstellparameters nicht erreicht werden kann; und/oder
s) Abrufen und/oder Ermitteln zumindest einer Einstellempfehlung, insbesondere durch das Steuer- und/oder Regelsystem und/oder die Erfassungsvorrichtung, für das Spritzmittel und/oder die Spritze; und
t) Visualisieren der Einstellempfehlung für einen Bediener.

9. Landwirtschaftliche Spritze (10), insbesondere mit einem zugeordneten Steuer- und/oder Regelsystem (200), zum Ausbringen von Spritzmittel (30), umfassend,
- zumindest ein, insbesondere quer zu einer Fahrtrichtung (F) ausklappbares, an der landwirtschaftlichen Spritze (10) angeordnetes Gestänge (12),
- mehrere nebeneinander an dem Gestänge (12) angeordnete Ausbringelemente (20), insbesondere Spritzdüsen (21), die dazu eingerichtet sind, das Spritzmittel (30) auf der Basis eines einstellbaren Einstellparameters auf der landwirtschaftlichen Nutzfläche (N) und/oder dem Pflanzenbestand (P) auszubringen und wenigstens eine Oberfläche (P1) zumindest teilweise mit Spritzmittel (30) zu benetzen, und
- zumindest eine der Spritze (10) zugeordnete Erfassungsvorrichtung (40) die zur Bestimmung einer Ist-Benetzungsqualität dazu eingerichtet ist, die zumindest eine Oberfläche (P1) in einem benetzten Zustand zu erfassen, wobei anhand der Ist-Benetzungsqualität und einer vorgebbaren und/oder abrufbaren Soll-Benetzungsqualität eine Abweichung ermittelbar ist, **dadurch gekennzeichnet, dass** der zumindest eine Einstellparameter auf der Basis der Abweichung anpassbar ist; und dass zur Anpassung des zumindest einen Einstellparameters Daten kabellos, insbesondere über Funk, zwischen der zumindest einen Erfassungsvorrichtung (40) und der Spritze (10) übertragbar sind, wobei die Erfassungsvorrichtung (40) durch den Bediener (B) entlang der landwirtschaftlichen Nutzfläche (N) und/oder des Pflanzenbestands (P) tragbar ist, und wobei die Erfassungsvorrichtung (40) als ein Mobilfunkgerät (41b) mit zumindest einem optischen Erfassungsmittel ausgebildet oder, vorzugsweise als Sensoranordnung (41c), zumindest teilweise aus der Oberfläche (P2) gebildet ist.

10. Spritze (10) nach Anspruch 9, **dadurch gekennzeichnet, dass** die wenigstens eine Oberfläche (P2) zumindest teilweise ein auslegbares und/oder anbringbares Haft- und/oder Auffangelement (43) bildet.

11. Spritze (10) nach zumindest einem der vorgenannten Ansprüche 9 oder 10, mit zumindest einer, insbesondere am Gestänge (12), angeordneten Sensoreinheit (41a) die dazu eingerichtet ist, zumindest eine Oberfläche (P1) des Pflanzenbestands (P) in einem benetzten Zustand zu erfassen, **dadurch gekennzeichnet, dass** die Ist-Benetzungsqualität, insbesondere die Abweichung, auf der Basis der mittels der zumindest einen Sensoreinheit (41a) und der Erfassungsvorrichtung (40) erfassbaren Oberflächen (P1, P2) ermittelbar ist.

12. Spritze (10) nach Anspruch 11, **dadurch gekennzeichnet, dass** die zumindest eine Sensoreinheit (41a) mittels der zumindest einen Erfassungsvorrichtung (40), insbesondere auf der Basis der zumindest einen mittels der Erfassungsvorrichtung (40) erfassbaren Oberfläche (P2), kalibrierbar ist.

13. Spritze (10) nach zumindest einem der vorgenannten Ansprüche 9 bis 12, **dadurch gekennzeichnet, dass** die landwirtschaftliche Spritze (10), insbesondere das Steuer- und/oder Regelsystem (200), dazu eingerichtet ist, das Verfahren zum Ausbringen von Spritzmittel (30) nach zumindest einem der Ansprüche 1 bis 8 auszuführen.

## Claims

1. Method for applying spraying agents (30), in particular plant protection agents and/or fertilizers, comprising the steps of:
a) applying the spraying agent (30) onto an agricultural area (N) and/or its plant population (P) by means of an agricultural sprayer (10) which has at least one adjusted setting parameter;
b) wetting at least one surface (P1) with the spraying agent (30);
c) detecting the at least one wetted surface (P1) by means of at least one detection device (40) associated with the sprayer (10);
d) determining an actual wetting quality on the basis of the at least one detected surface (P1);
e) determining at least one deviation of the actual wetting quality from a retrievable and/or predefinable target wetting quality;
**characterized by** the following steps:
f) adjusting the at least one setting parameter on the basis of the at least one deviation; wherein data are transmitted at least partially wirelessly, in particular via radio, between the at least one detection device (40) and the sprayer (10), in particular a control and/or regulating system (200), in order to adjust the at least one setting parameter,
g) detecting the at least one wetted surface (P1) by the at least one detection device (40) being carried by an operator (B) along the agricultural area (N) and/or the plant population (P).

2. Method according to claim 1, **characterized in that** at least one of steps d) to f) is carried out by the at least one detection device (40).

3. Method according to at least one of the preceding claims,
**characterized by** at least one of the following steps:
h) placing and/or attaching the at least one surface (P2) along the agricultural area (N) and/or the plant population (P).

4. Method according to claim 3, **characterized by** the step of:
i) determining and/or retrieving at least one target position (50) along the agricultural area (N) and/or the plant population (P); and
j) visualizing the at least one target position (50) for an operator; wherein the target position (50) is taken into account for carrying out at least one of steps g) and h).

5. Method according to at least one of the preceding claims,
**characterized by** at least one of the following steps:
k) visualizing the at least one deviation for an operator; and/or
l) visualizing at least one new setting parameter determined and/or retrieved on the basis of the deviation; and
m) replacing, by the operator, the at least one setting parameter with the determined and/or retrieved setting parameter.

6. Method according to at least one of the preceding claims,
**characterized by** the step of:
n) transmitting at least one piece of information about the environment, the spraying agent (30), the plant population (P) and/or the sprayer (10), in particular about the setting parameter, to the at least one detection device (40).

7. Method according to at least one of the preceding claims,
**characterized by** at least one of the following steps:
o) retrieving and/or using at least one characteristic map, preferably having at least one function curve, which contains a relationship of the at least one setting parameter to the actual wetting quality, in particular the deviation; wherein the at least one setting parameter is preferably adjusted based on the characteristic map, in particular the at least one function curve; and/or
p) adjusting the at least one characteristic map, preferably the at least one function curve, taking into account at least one piece of information about the environment, the spraying agent, the plant population, the spray nozzle and/or the sprayer.

8. Method according to claim 7, **characterized by** the steps of:
q) checking, on the basis of the at least one characteristic map, in particular the at least one function curve, whether the at least one setting parameter can be adjusted in such a way that the target wetting quality can be at least substantially achieved; and
r) informing and/or alerting an operator if a target wetting quality cannot be achieved by adjusting at least one setting parameter; and/or
s) retrieving and/or determining at least one setting recommendation, in particular by the control and/or regulating system and/or the detection device, for the spraying agent and/or the sprayer; and
t) visualizing the setting recommendation for an operator.

9. Agricultural sprayer (10), in particular having an associated control and/or regulating system (200), for applying spraying agent (30), comprising,
- at least one boom (12), which can be folded out in particular transversely to a direction of travel (F) and is arranged on the agricultural sprayer (10),
- a plurality of application elements (20), in particular spray nozzles (21), arranged next to one another on the boom (12), which are designed to apply the spraying agent (30) onto the agricultural area (N) and/or the plant population (P) on the basis of an adjustable setting parameter and to at least partially wet at least one surface (P1) with spraying agent (30), and
- at least one detection device (40), which is associated with the sprayer (10) and is designed to determine an actual wetting quality in order to detect the at least one surface (P1) in a wetted state, wherein a deviation can be determined on the basis of the actual wetting quality and a predefinable and/or retrievable target wetting quality,
**characterized in that** the at least one setting parameter is adjustable on the basis of the deviation; **and in that** in order to adjust the at least one setting parameter, data can be transmitted wirelessly, in particular via radio, between the at least one detection device (40) and the sprayer (10), wherein the detection device (40) can be carried by the operator (B) along the agricultural area (N) and/or the plant population (P), and wherein the detection device (40) is designed as a mobile radio device (41b) having at least one optical detection means or, preferably as a sensor arrangement (41c), is formed at least partially by the surface (P2).

10. Sprayer (10) according to claim 9, **characterized in that** the at least one surface (P2) at least partially forms a placeable and/or attachable adherent and/or collecting element (43).

11. Sprayer (10) according to at least one of the preceding claims 9 or 10, comprising at least one sensor unit (41a), in particular arranged on the boom (12), which is designed to detect at least one surface (P1) of the plant population (P) in a wetted state, **characterized in that** the actual wetting quality, in particular the deviation, can be determined on the basis of the surfaces (P1, P2) that can be detected by means of the at least one sensor unit (41a) and the detection device (40).

12. Sprayer (10) according to claim 11, **characterized in that** the at least one sensor unit (41a) can be calibrated by means of the at least one detection device (40), in particular on the basis of the at least one surface (P2) that can be detected by means of the detection device (40).

13. Sprayer (10) according to at least one of the preceding claims 9 to 12, **characterized in that** the agricultural sprayer (10), in particular the control and/or regulating system (200), is designed to carry out the method for applying spraying agent (30) according to at least one of claims 1 to 8.

## Revendications

1. Procédé pour l'épandage d'un produit de pulvérisation (30), en particulier d'un produit phytosanitaire et/ou d'engrais, comportant les étapes consistant à :
a) épandre le produit de pulvérisation (30) à l'aide d'un pulvérisateur agricole (10), sur une surface agricole utile (N) et/ou sa population végétale (P), avec au moins un paramètre de réglage réglé ;
b) mouiller au moins une surface (P1) avec le produit de pulvérisation (30) ;
c) détecter au moins une surface mouillée (P1) à l'aide d'au moins un dispositif de détection (40) associé au pulvérisateur (10) ;
d) déterminer une qualité de mouillage réelle à l'aide de ladite au moins une surface détectée (P1) ;
e) déterminer au moins un écart de la qualité de mouillage réelle par rapport à une qualité de mouillage de consigne pouvant être appelée et/ou prédéfinie ;
**caractérisé par** les étapes suivantes :
f) adaptation de l'au moins un paramètre de réglage sur la base de l'au moins un écart ; dans lequel, pour l'adaptation de l'au moins un paramètre de réglage, des données sont transmises au moins partiellement sans fil, en particulier par radio, entre l'au moins un dispositif de détection (40) et le pulvérisateur (10), en particulier un système de commande et/ou de régulation (200),
g) détection de l'au moins une surface mouillée (P1) en portant l'au moins un dispositif de détection (40) le long de la surface agricole utile (N) et/ou de la population végétale (P) par un opérateur (B).

2. Procédé selon la revendication 1, **caractérisé en ce qu'**au moins une des étapes d) à f) est réalisée par l'au moins un dispositif de détection (40).

3. Procédé selon au moins l'une des revendications précédentes,
**caractérisé par** au moins l'une des étapes suivantes :
h) dépôt et/ou application de l'au moins une surface (P2) le long de la surface agricole utile (N) et/ou de la population végétale (P).

4. Procédé selon la revendication 3, **caractérisé par** l'étape consistant à :
i) déterminer et/ou appeler au moins une position de consigne (50) le long de la surface agricole utile (N) et/ou la population végétale (P) ; et
j) visualiser au moins une position de consigne (50) pour un opérateur ; dans lequel la position de consigne (50) est prise en compte pour la réalisation d'au moins l'une des étapes g) et h).

5. Procédé selon au moins l'une des revendications précédentes, **caractérisé par** au moins l'une des étapes suivantes :
k) visualisation de l'au moins un écart pour un opérateur ; et/ou
l) visualisation d'au moins un nouveau paramètre de réglage déterminé et/ou appelé sur la base de l'écart ; et
m) remplacement de l'au moins un paramètre de réglage par le paramètre de réglage déterminé et/ou appelé par l'opérateur.

6. Procédé selon au moins l'une des revendications précédentes,
**caractérisé par** l'étape consistant à :
n) transférer au moins une information concernant l'environnement, le produit de pulvérisation (30), la population végétale (P) et/ou le pulvérisateur (10), en particulier le paramètre de réglage, à l'au moins un dispositif de détection (40).

7. Procédé selon au moins l'une des revendications précédentes, **caractérisé par** au moins l'une des étapes suivantes :
o) appel et/ou utilisation d'au moins un champ caractéristique, de préférence avec au moins une courbe de fonction, qui contient une dépendance de l'au moins un paramètre de réglage par rapport à la qualité de mouillage réelle, en particulier l'écart ; dans lequel l'au moins un paramètre de réglage est adapté de préférence en fonction du champ caractéristique, en particulier de l'au moins une courbe de fonction ; et/ou
p) adaptation de l'au moins un champ caractéristique, de préférence l'au moins une courbe de fonction, en tenant compte d'au moins une information concernant l'environnement, le produit de pulvérisation, la population végétale, la buse de pulvérisation et/ou le pulvérisateur.

8. Procédé selon la revendication 7, **caractérisé par** les étapes consistant à :
q) vérifier à l'aide de l'au moins un champ caractéristique, en particulier de l'au moins une courbe de fonction, si l'au moins un paramètre de réglage peut être adapté de telle sorte que la qualité de mouillage de consigne peut être atteinte au moins sensiblement ; et
r) informer et/ou alerter un opérateur lorsqu'une qualité de mouillage de consigne ne peut pas être atteinte par adaptation de l'au moins un paramètre de réglage ; et/ou
s) appeler et/ou déterminer au moins une recommandation de réglage, en particulier par le système de commande et/ou de régulation et/ou le dispositif de détection, pour le produit de pulvérisation et/ou le pulvérisateur ; et
t) visualiser la recommandation de réglage pour un opérateur.

9. Pulvérisateur agricole (10), en particulier comportant un système de commande et/ou de régulation (200) associé, pour l'épandage d'un produit de pulvérisation (30), comprenant,
- au moins une rampe (12), en particulier déployable transversalement à une direction de déplacement (F), disposée sur le pulvérisateur agricole (10),
- plusieurs éléments d'épandage (20) disposés les uns à côté des autres sur la rampe (12), en particulier des buses de pulvérisation (21), qui sont conçues pour appliquer le produit de pulvérisation (30) sur la surface agricole utile (N) et/ou la population végétale (P) sur la base d'un paramètre de réglage réglable et pour mouiller au moins partiellement au moins une surface (P1) avec le produit de pulvérisation (30), et
- au moins un dispositif de détection (40) associé au pulvérisateur (10) qui, pour la détermination d'une qualité de mouillage réelle, est conçu pour détecter l'au moins une surface (P1) dans un état mouillé, dans lequel un écart peut être déterminé à l'aide de la qualité de mouillage réelle et d'une qualité de mouillage de consigne pouvant être prédéfinie et/ou appelée,
**caractérisé en ce que** l'au moins un paramètre de réglage peut être adapté sur la base de l'écart ; et **en ce que,** pour l'adaptation de l'au moins un paramètre de réglage, des données peuvent être transmises sans fil, en particulier par radio, entre l'au moins un dispositif de détection (40) et le pulvérisateur (10), dans lequel le dispositif de détection (40) peut être porté par l'opérateur (B) le long de la surface agricole utile (N) et/ou de la population végétale (P), et dans lequel le dispositif de détection (40) est réalisé sous la forme d'un appareil de radiotéléphonie mobile (41b) comportant au moins un moyen de détection optique ou est formé, de préférence sous la forme d'un agencement de capteurs (41c), au moins partiellement à partir de la surface (P2).

10. Pulvérisateur (10) selon la revendication 9, **caractérisé en ce que** l'au moins une surface (P2) forme au moins partiellement un élément d'adhérence et/ou d'accrochage (43) pouvant être déployé et/ou appliqué.

11. Pulvérisateur (10) selon au moins l'une des revendications 9 ou 10 précitées, comportant au moins une unité de capteur (41a) disposée en particulier sur la rampe (12), qui est conçue pour détecter au moins une surface (P1) de la population végétale (P) dans un état mouillé, **caractérisé en ce que** la qualité réelle du mouillage, en particulier l'écart, peut être déterminée sur la base des surfaces (P1, P2) pouvant être détectées à l'aide de l'au moins une unité de capteur (41a) et du dispositif de détection (40).

12. Pulvérisateur (10) selon la revendication 11, **caractérisé en ce que** l'au moins une unité de capteur (41a) peut être calibrée à l'aide de l'au moins un dispositif de détection (40), en particulier sur la base de l'au moins une surface (P2) pouvant être détectée à l'aide du dispositif de détection (40).

13. Pulvérisateur (10) selon au moins l'une des revendications 9 à 12 précitées, **caractérisé en ce que** le pulvérisateur agricole (10), en particulier le système de commande et/ou de régulation (200), est conçu pour mettre en oeuvre le procédé d'épandage d'un produit de pulvérisation (30) selon au moins l'une des revendications 1 à 8.
